# DEMANDE DE BREVET EUROPEEN

(11) **EP 1 777 612 A1**
(43) Date de publication de la demande: **25.04.2007**
(21) Numéro de dépôt: 05109493.6
(22) Date de dépôt: 12.10.2005
(51) Int. Cl.: G06F 3/048, G06F 3/023

(54) **Boîtier de commande avec capteur d'empreintes digitales**

(71) Demandeur: DOS SANTOS AFONSO, M. José, Andorra la Vella (AD)
(72) Inventeur: DOS SANTOS AFONSO, M. José, Andorra la Vella (AD)
(74) Mandataire: Van Straaten, Joop

(57) **Abrégé**

L'invention concerne un boîtier de commande (2) comprenant un capteur d'empreintes digitales (6) capable de transmettre hors du boîtier (2) une instruction de commande déterminée (8) dépendante de l'orientation d'un doigt (14) sur le capteur (6). Le capteur (6) nécessite une première durée (Ta) pour détecter la présence d'un doigt (14) et une deuxième durée (Tb) pour acquérir l'empreinte, la première durée (Ta) étant inférieure à la deuxième (Tb). Le boîtier (2) est capable de transmettre une instruction de commande déterminée (8) dépendante du fait qu'un doigt (14) soit resté posé sur le capteur (6) durant une durée de pose (Tp) plus longue qu'une troisième durée (Tc), supérieure aux première et deuxième durées (Ta, Tb); ou durant une durée de pose (Tp) plus courte que la troisième durée (Tc), que la durée de pose (Tp) soit inférieure ou supérieure à la deuxième durée (Tb).

## Description

### Domaine de l'invention

L'invention se rapporte à un boîtier de commande comprenant un capteur d'empreintes digitales; le capteur étant capable de transmettre hors du boîtier une instruction de commande déterminée dépendante de l'orientation détectée d'un doigt sur le capteur.

Ce type de boîtier de commande peut par exemple être intégré dans un système de commande d'un dispositif automatique, avec authentification basée sur la reconnaissance biométrique ou non, pour un système de contrôle d'accès ou de commande de verrouillage, un système anti-vol pour véhicule, de contrôle pour véhicule (avec paramétrage et limitation de vitesse par exemple) ou un système de pistage (tracking) par satellite d'une flotte de véhicules.

### État de la technique

On connaît de tels types de boîtier de commande, ou interface de commande, dans l'état de la technique.

La demande de brevet américain US 2004/0132490 A1 par exemple divulgue un terminal de téléphone mobile présentant un écran et un clavier. Un détecteur biométrique est disposé sur la surface d'opération pour scanner et identifier une empreinte digitale. Le terminal est commandé en particulier selon l'orientation de l'empreinte digitale. Il est par exemple possible pour un utilisateur de composer un numéro de téléphone par identification successive de son empreinte digitale dans des orientations différentes sur le détecteur. Afin de terminer la composition du numéro de téléphone, l'utilisateur laisse le doigt représentant le dernier chiffre sur le détecteur plus longtemps qu'un intervalle donné, ce qui enclenche automatique la composition effective du numéro de téléphone pour l'établissement de la communication.

Bien que les boîtiers de commande, ou interfaces de commande, de l'état de la technique présentent d'incontestables avantages pour une commande aisée d'un dispositif et permettent par exemple une navigation intuitive à travers un menu, ceux-ci peuvent se révéler difficiles à utiliser pour le grand public. En effet, poser son doigt pour l'identification de son empreinte digitale pendant une durée précisément inférieure ou précisément supérieure à une durée déterminée, respectivement par exemple pour composer un nouveau chiffre d'un numéro de téléphone ou pour terminer la composition d'un numéro, peut se révéler délicat et mener à des erreurs de manipulation.

### Résumé de l'invention

Un but de l'invention est de fournir un boîtier de commande plus aisé à utiliser pour le grand public et menant généralement à moins d'erreurs de manipulation.

A cette fin, le boîtier de commande selon l'invention est caractérisé en ce que le capteur nécessite une première durée pour détecter la présence d'un doigt et une deuxième durée pour acquérir l'empreinte digitale, la première durée étant inférieure à la deuxième durée; et le boîtier étant capable de transmettre hors de celui-ci une instruction de commande déterminée dépendante du fait qu'un doigt reste posé sur le capteur soit, de manière substantiellement immobile, durant une durée de pose plus longue qu'une troisième durée, la troisième durée étant supérieure aux première et deuxième durées; soit, de manière mobile ou immobile, durant une durée de pose plus courte que la troisième durée, peu importe que la durée de pose soit inférieure ou supérieure à la deuxième durée.

Le boîtier de commande selon l'invention est plus facile d'utilisation et entrer avec celui-ci deux commandes distinctes déterminées est plus aisé pour les raisons suivantes.

Alors que, dans l'état de la technique, une identification de l'empreinte est nécessaire pour la génération de toute commande et la durée de l'identification permet de distinguer de la commande générée, le boîtier de commande selon l'invention permet d'engendrer ou provoquer une commande même dans le cas où l'empreinte n'est pas identifiée.

Un capteur nécessitant une première durée, un premier laps de temps, pour détecter la présence d'un doigt sur le capteur et une deuxième durée supérieure à la première pour capter l'empreinte digitale est utilisé. La première durée peut par exemple être d'une milliseconde et la deuxième durée de 100 millisecondes. Une troisième durée, supérieure aux deux premières, sépare les deux commandes distinctes et constitue d'une certaine manière la frontière pour l'interprétation du choix d'un utilisateur. Cette troisième peut par exemple être fixée à 500 millisecondes. Les utilisateurs ayant une perception intuitive suffisante de ce que constitue une durée supérieure ou inférieure à la troisième durée n'ont pas de difficulté à poser leur doigt pendant une durée inférieure ou supérieure à la troisième durée. Ils n'ont donc pas de problème pour engendrer l'une ou l'autre commande. En revanche, les utilisateurs présentant une moins bonne perception de la durée ou présentant un habileté digitale ou manuelle moindre, peuvent, et c'est là un effet significatif de l'invention, se contenter d'effleurer le capteur, c'est-à-dire qu'ils peuvent se contenter de passer leur doigt sur la surface du capteur afin d'engendrer une des deux commandes distinctes. Dans le cas d'un effleurement, le doigt étant mobile, peu importe la durée de l'effleurement, il n'y a pas de détection de l'empreinte digitale, mais juste une détection de la présence d'un doigt. Dans ce cas, c'est donc toujours la commande liée à une durée inférieure à la troisième durée qui est engendrée. Afin d'engendrer la commande liée à une durée supérieure à la troisième durée, il suffit de laisser le doigt immobile suffisamment longtemps sur le capteur, ce qui ne présente généralement pas de difficulté.

Le boîtier selon l'invention est donc plus aisé à utiliser pour le grand public et en particulier pour les personnes ayant une mauvaise perception du temps ou une habileté digitale ou manuelle moindre, et le boîtier mène donc généralement à moins d'erreurs de manipulation. Il est à noter toutefois que la possibilité d'engendrer une des deux commandes par effleurement du capteur n'exclut pas la possibilité d'engendrer cette commande par identification de courte durée, contrôlée. Deux approches sont donc possibles pour engendrer la commande liée à la plus courte durée, soit la pose pendant une durée contrôlée (inférieure à la troisième durée), soit l'effleurement (ne menant pas une identification). Le boîtier est donc flexible, en ce sens qu'il est adapté à deux utilisations différentes.

Le boîtier de commande selon l'invention offre une grande sécurité d'accès grâce à la nécessité d'une identification d'empreintes digitales pour l'accès à certaines commandes, une grande richesse de commandes distinctes potentielles pour une navigation intuitive dans un menu ou une arborescence par exemple et enfin une relative facilité et flexibilité d'utilisation. Plusieurs orientations d'un même doigt et de doigts différents peuvent en effet engendrer des commandes distinctes. De plus, au moins deux commandes distinctes déterminées peuvent être engendrées en fonction de la durée de pose du doigt. Elles peuvent aussi être engendrées en fonction du fait que le capteur soit simplement effleuré (mobilité d'un doigt sur le capteur) ou qu'un doigt soit posé sur le capteur pendant une durée supérieure à la troisième durée (immobilité prolongée d'un doigt sur le capteur).

L'homme du métier comprendra que par l'expression « le capteur est capable de transmettre hors du boîtier une instruction de commande déterminée dépendante de l'orientation détectée d'un doigt sur le capteur », pour être tout à fait précis, il faut bien entendu comprendre « le capteur est capable de transmettre hors du boîtier une instruction de commande déterminée dépendante de l'empreinte d'un doigt et de son orientation sur le capteur, c'est-à-dire non seulement dépendante de l'individu auquel appartient le doigt mais aussi de l'orientation du doigt lors de la pose sur le capteur ».

Une réalisation particulière du boîtier selon l'invention comprend en outre une unité centrale gérant l'état du boîtier, au sens d'un état d'une machine d'états finis; et au moins deux sources lumineuses commandables disposées près du capteur pour la communication de l'état du boîtier à un utilisateur.

Cette réalisation particulière présente l'avantage d'une simplicité de visualisation des états du système, d'une manière particulièrement compacte et non compréhensible par des tiers ne connaissant pas la signification des codes. Deux sources lumineuses permettent de représenter quatre états distincts, trois sources lumineuses huit états distincts, et ainsi de suite.

Une réalisation particulière du boîtier selon l'invention comprend une surface de commande sur laquelle est disposé le capteur, et sur laquelle le capteur est le seul et unique composant actif d'entrée, ou périphérique d'entrée, présent.

De nombreux interfaces de commande de l'état de la technique, bien que basées sur une reconnaissance biométrique doivent être programmées par l'intermédiaire d'un périphérique extérieur telle que une télécommande, un clavier intégré ou non au boîtier 2, un ordinateur ou un périphérique dédié. En cas de vol du périphérique extérieur ou dispositif de programmation externe, toute personne en possession du dispositif peut potentiellement s'enregistrer, c'est-à-dire enregistrer son empreinte digitale comme une empreinte autorisée, désenregistrer quelqu'un ou réinitialiser le système d'authentification ou de commande. En permettant l'entrée de données uniquement via une empreinte digitale, le boîtier selon la réalisation particulière de l'invention empêche tout piratage du système.

Dans une réalisation particulière du boîtier selon l'invention, une base de données ou liste d'empreintes digitales autorisées sont répertoriées. Afin d'entrer les doigts ou empreintes autorisés, c'est-à-dire les doigts ou empreintes ayant l'autorisation d'engendrer des commandes via le boîtier de commande, un ou plusieurs doigts maîtres (c'est-à-dire un ou plusieurs doigts administrateurs) ou une ou plusieurs empreintes maîtres sont enregistrés lors de l'initialisation du boîtier de commande. Ces doigts ou empreintes maîtres peuvent à leur tour enregistrer des doigts ou empreintes autorisées et ainsi programmer ou paramétrer le comportement du boîtier de commande vis-à-vis des empreintes digitales.

Le boîtier comprenant un système de « doigts maîtres » - « doigts utilisateurs » selon une réalisation particulière de l'invention vise à permettre de substantiellement garantir l'inviolabilité de la programmation du système par une reconnaissance formelle, via ses caractéristiques biométriques, de la personne qui souhaite programmer le boîtier.

Selon une réalisation particulière de l'invention, le boîtier de commande peut être programmé et la base de données ou liste d'empreintes (avec leurs attributs d'autorisation) peut être remplie uniquement grâce au capteur d'empreintes digitales (seul périphérique d'entrée dans ce cas) et grâce à un indicateur de l'état du système. L'indicateur de l'état du système peut par exemple être une série de sources lumineuses commandables, par exemple des diodes électroluminescentes (LED), compactes et fiables. Une interface utilisateur compacte et sécurisée est ainsi réalisée.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
- Fig.1: montre une vue schématique d'une réalisation particulière du boîtier selon l'invention;
- Fig.2: montre une vue schématique d'une autre réalisation particulière du boîtier selon l'invention, présentant deux sources lumineuses commandables;
- Fig. 3: à 5 montre trois lignes du temps illustrant le principe de fonctionnement du boîtier de commande selon l'invention;
- Fig. 6: montre un exemple de menu arborescent apte à être parcouru par une réalisation particulière du boîtier de commande selon l'invention;
- Fig. 7: illustre schématiquement une méthode d'enregistrement de doigts ou empreintes dans une réalisation particulière du boîtier de commande selon l'invention;
- Fig. 8: montre schématiquement un capteur et des sources lumineuses commandables d'une réalisation particulière du boîtier de commande selon l'invention;
- Fig. 9: illustre schématiquement les composantes d'un système de reconnaissance et de pistage (tracking) selon un autre aspect de l'invention; et
- Fig. 10: illustre schématiquement une méthode de reconnaissance et de pistage (tracking) selon cet autre aspect de l'invention.

Les figures ne sont pas dessinées à l'échelle. Généralement, des éléments semblables sont dénotés par des références semblables dans les figures.

### Description détaillée de modes de réalisation particuliers

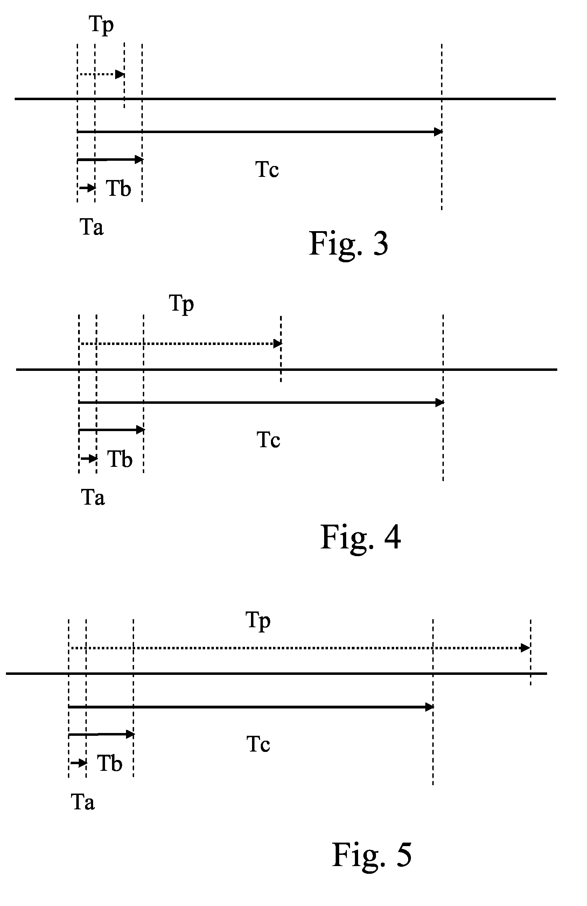

Les lignes de temps des Fig. 3 à 5 illustrent les possibilités de commandes basées sur la durée d'une pose mobile ou immobile d'un doigt 14 sur le capteur 6 selon l'invention. La flèche en pointillée dessinée au-dessus de la ligne en trait continu dans chacune des trois figures représente la durée de la pose d'un doigt ou la durée de l'effleurement par un doigt 14 du capteur 6. Les trois flèches en trait continu représentent les trois durées Ta, Tb et Tc. Une pose ou un effleurement d'une durée inférieure à la première durée Ta sont considérés comme n'étant pas survenus du point de vue du capteur 6, puisque indétectables.

Six cas peuvent se produire: (I) une pose d'un doigt 14 sur le capteur 6 d'une durée supérieure à la première durée Ta mais inférieure à la deuxième durée Tb (voir Fig. 3), (II) une pose d'un doigt 14 sur le capteur 6 d'une durée supérieure à la deuxième durée Tb mais inférieure à la troisième durée Tc (voir Fig. 4), (III) une pose d'un doigt 14 sur le capteur 6 d'une durée supérieure à la troisième durée Tc (voir Fig. 5), (IV) un effleurement par un doigt 14 sur le capteur 6 d'une durée supérieure à la première durée Ta mais inférieure à la deuxième durée Tb (voir Fig. 3), (V) un effleurement par un doigt 14 sur le capteur 6 d'une durée supérieure à la deuxième durée Tb mais inférieure à la troisième durée Tc (voir Fig. 4), et (VI) un effleurement par un doigt 14 sur le capteur 6 d'une durée supérieure à la troisième durée Tc (voir Fig. 5).

Dans le cas (I), la présence du doigt 14 est détectée mais l'empreinte digitale n'est pas identifiée; dans les cas (II) et (III), la présence est détectée et l'empreinte est identifiée; dans les cas (IV), (V) et (VI), la présence est détectée mais l'empreinte ne l'est pas (le scannage n'étant pas possible vu l'effleurement, c'est-à-dire la mobilité du doigt). Une première commande déterminée correspond aux cas (I), (II), (IV), (V) et (VI) et une deuxième commande déterminée correspond au cas (III).

Un capteur d'empreintes digitales 6 de type RF FingerLoc^{®} AFS 8600, disponible chez AuthenTec, 709 S. Harbor City Blvd., Melbourne, Florida 32901, Etats-Unis d'Amérique, peut par exemple être utilisé. Ce capteur 6 ne réagit qu'à la présence d'un doigt dont la peau est irriguée par le sang. Il réalise un grand nombre de prises d'image par seconde (jusqu'à 1500). Si le capteur 6 en question est configuré pour envoyer 1500 signaux par seconde, Ta est alors égal à 0,66 millisecondes. Le nombre de signaux successifs transmis par le capteur 6 lui-même à l'unité de traitement peut avantageusement être compté de manière à calculer la durée de pose ou d'effleurement d'un doigt 14 sur le capteur 6, et ainsi décider d'une action ou l'autre suivant ce temps. Le temps nécessaire au scannage complet d'une empreinte digitale est d'environ 100 millisecondes, Tb vaut donc environ 100 millisecondes dans ce cas.

Le capteur FingerLoc^{®} AFS 8600 mesure 9216 points de l'empreinte digitale interne (environ 1 millimètre sous la peau) sur 1 centimètre carré de surface sensorielle. Puis il analyse ces 9216 points pour en extraire entre 12 et 20 qui présentent des caractéristiques spéciales appelées « minuties » et comportant chacune 4 paramètres. Ces points caractéristiques constituent une « signature » ou « gabarit » numérique de l'empreinte. Chaque doigt 14 présenté est alors analysé et comparé aux « signatures » en mémoires. Lorsqu'un « gabarit » en mémoire correspond à celui du doigt présenté, le processeur donne alors l'ordre de l'action correspondant à ce « gabarit ».

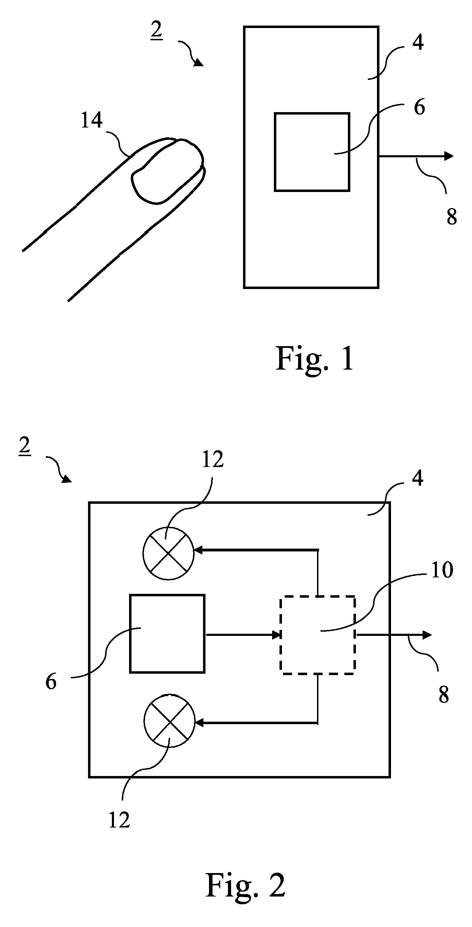

La Fig. 1 illustre schématiquement une réalisation particulière d'un boîtier de commande 2 selon l'invention, comprenant un capteur d'empreintes digitales 6 sur une surface de commande 4, le boîtier 2 étant capable de transmettre un signal de commande représentant une instruction de commande 8.

Le boîtier de commande 2 selon cette réalisation particulière fait partie d'un système de commande plus général comprenant, outre un capteur d'empreintes digitales 6, une unité de mémoire (non représentée) capable de contenir au moins des données électriques représentant un état parmi des états possibles du système, et des unités d'acquisition des données provenant du capteur 6, de traitement de celles-ci et de commande pour la génération de la commande réelle (d'ouverture ou de verrouillage d'une porte par exemple).

L'unité de mémoire (non représentée) permet de mémoriser un état au sens d'un état d'une machine à états finis, et permet également la mémorisation des données relatives aux empreintes autorisées.

L'unité d'acquisition (non représentée) est constituée de moyens électromagnétiques ou électroniques pour acquérir des données issues du capteur 6 et de transmettre un signal acquis (non représenté), électrique, électromagnétique ou optique par exemple, en fonction des données acquises.

L'unité de traitement (non représentée) est constituée de moyens électromagnétiques ou électroniques pour recevoir le signal acquis, pour consulter et/ou modifier les données de l'unité de mémoire en fonction du signal acquis, et donc modifier par exemple l'état du système, pour transmettre un signal, électrique, électromagnétique ou optique par exemple, en fonction des données et représentant l'état du système, et pour transmettre un signal représentant la commande.

L'unité de commande (non représentée) est constituée de moyens électromagnétiques ou électroniques pour recevoir le signal représentant la commande, et est capable de transmettre une commande physique en fonction du signal.

Les unités de mémoire, d'acquisition, de traitement et de commande peuvent être ou non toutes présentes dans le boîtier 2 lui-même. Dans une réalisation particulière du boîtier 2 de commande selon l'invention et du système plus globale de commande englobant le boîtier 2 selon l'invention, les unités de traitement, de mémoire et de commande sont désolidarisées du capteur 6. Dans cette réalisation particulière, un boîtier séparé, dissimulé ou disposé dans un endroit difficile d'accès comprend les unités de traitement (ou gestion), de mémoire et de commande. Cette technologie peut être dite « à intelligence déportée ».

Dans cette réalisation particulière et avec l'utilisation d'un capteur AFS 8600 par exemple, le capteur 6 lui-même peut présenter des dimensions de 20 x 20 x 1.5 millimètres et le boîtier 2 lui-même d'environ 28 x 28 x 6 millimètres. Le boîtier séparé comprenant les unités de traitement, de mémoire et de commande peut présenter des dimensions de 84 x 55 x 24 millimètres par exemple. Ces exemples soulignent le caractère compact et potentiellement discret des deux boîtiers.

Séparer physiquement la « zone d'identification ou acquisition » (c'est-à-dire le capteur biométrique 6 et l'unité d'acquisition) de la « zone de commande » (c'est-à-dire les unités de traitement, de mémoire et de commande) permet d'éviter qu'une personne puisse accéder à la partie commande en arrachant l'interface utilisateur et puisse court-circuiter l'identification ou authentification, ou bien puisse remplacer le boîtier par un autre configuré à son avantage.

La Fig. 2 montre une vue schématique d'une autre réalisation particulière du boîtier 2 selon l'invention, présentant deux sources lumineuses commandables 12 et commandées par une unité centrale 10. Les sources lumineuses 12, par exemples des diodes électroluminescentes, jouent le rôle de périphérique de sortie. Chaque état du système est représenté sur les diodes par une combinaison binaire, permettant à l'utilisateur de connaître à tout instant où il se trouve dans un menu, par exemple un menu de programmation du système ou un menu d'accès ou de commande. Les sources lumineuses 12 peuvent être remplacées par d'autres types de périphérique sonore (tel qu'un vibreur ou ronfleur (buzzer) par exemple) ou tactile par exemple.

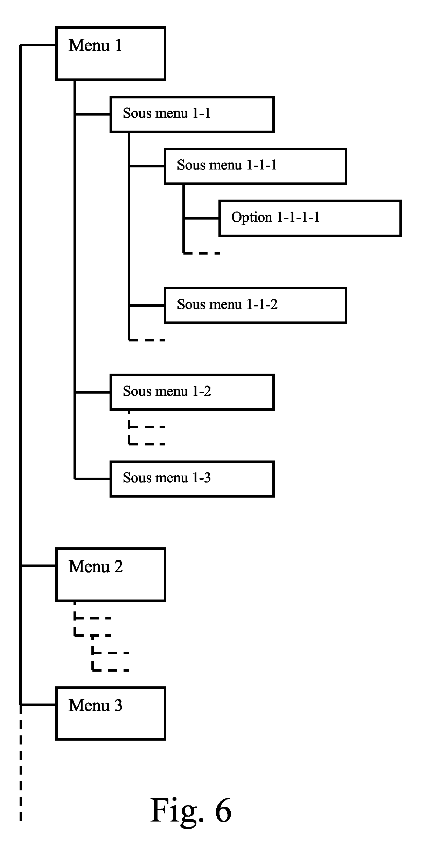

La Fig. 6 montre un exemple de menu arborescent qui peut être parcouru par une réalisation particulière du boîtier 2 de commande selon l'invention.

Lors de l'initialisation, il est nécessaire d'enregistrer via le capteur 6 au moins un doigt maître, qui est alors considéré comme administrateur de plus haut niveau. La possibilité est alors donnée au « maître » de programmer et de gérer le boîtier 2, la liste des empreintes et utilisateurs autorisées, etc.

L'utilisateur possédant les droits de programmation commence par s'authentifier sur le capteur 6. Une fois reconnu, le boîtier 2 l'autorise à entrer dans le mode programmation. Le périphérique de sortie indique dans quelle partie du menu de type arborescent "se trouve" l'utilisateur via un code défini par le programmeur (par exemple un code binaire affiché sur des diodes électroluminescentes). Chaque nouvelle acquisition d'une image via le périphérique d'entrée (avec utilisation et nouvelle vérification des données d'authentification - pour une plus grande sécurité - ou non - pour la rapidité de traitement), c'est-à-dire par exemple le capteur d'empreintes digitales, permet de rentrer dans le sous-menu local et/ou de valider. Pour passer d'un option à l'autre plusieurs façons sont possibles suivant le type de technologie utilisée (effleurement, ou pose d'une durée inférieure à la troisième durée comme expliqué plus haut, ou encore changement de doigt 16 dans le cas d'un capteur 2 d'empreintes digitales, changement de main pour la reconnaissance de la forme des mains, etc.).

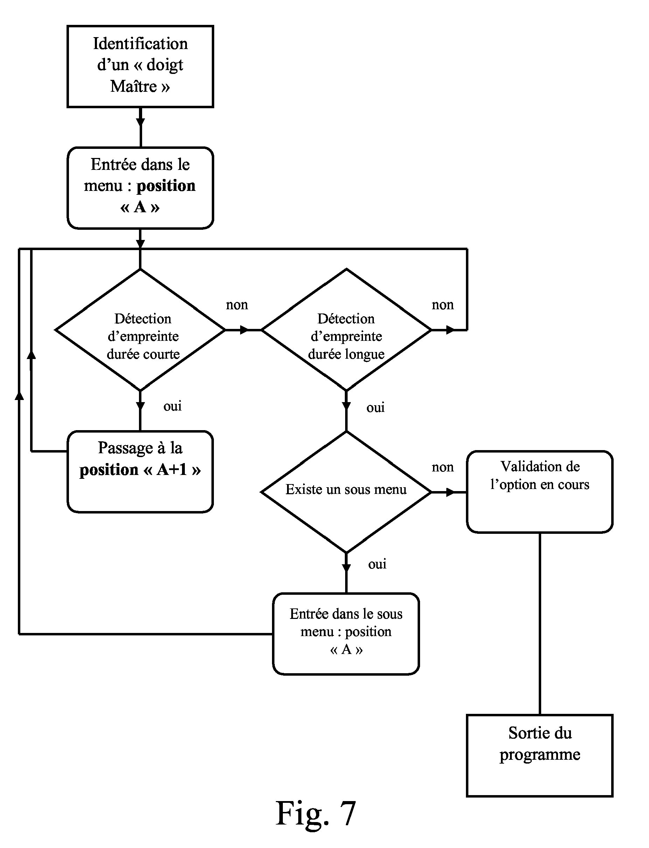

La Fig. 7 illustre schématiquement une méthode d'enregistrement de doigts 14 ou empreintes selon une réalisation particulière du boîtier 2 selon l'invention. Cette méthode permet la programmation du boîtier 2. Une fois le doigt maître (ou doigt « administrateur », peu importe le nom qui lui est donné) enregistré, le système passe dans une position donnée « A » dans le menu. Si une empreinte de courte durée est détectée (si la durée de l'identification est inférieure à la troisième durée comme expliqué plus haut) (cas (I) ou (II)) ou si un effleurement est détecté (engendrant une détection de présence, mais pas d'identification) (cas (IV), (V) ou (VI)), l'état du boîtier, c'est-à-dire dans ce cas-ci la situation dans le menu, passe en position « A+1 », c'est-à-dire dans une position suivante de même niveau dans l'arborescence. Si, en revanche, une pose immobile ou identification d'une durée plus longue que la troisième durée est détectée (cas (III)), l'état du boîtier 2, c'est-à-dire dans ce cas-ci la situation dans le menu, passe dans un sous-menu si toutefois un tel sous-menu existe. Si c'est le cas le même schéma de navigation tel que décrit plus haut est à nouveau engendré. S'il n'y a pas de sous-menu, un cas (III) déclenche alors la validation de l'option choisie (une action particulière est réalisée), un signal optional visuel ou sonore de validation est émis et la méthode se termine.

Ceci n'est qu'exemple de menu de programmation parcouru par un doigt maître. Des menus semblables peuvent exister pour une commande classique par un doigt utilisateur ou intermédiaire. Le boîtier de commande 2 et du système de commande dont il fait partie présentent des caractéristiques de sécurité plus robustes que les boîtiers de commande et systèmes de commande classiques faisant usage d'un mot de passe, d'une carte ou de tout autre moyen d'identification non biométrique.

Pour un doigt « maître », une fois reconnu, le processeur permet de rentrer dans le menu de programmation et autorise ainsi le « propriétaire » du doigt 14 à paramétrer le programme ou utiliser certaines de ses fonctions telles que l'enregistrement d'un nouvel utilisateur, l'enregistrement de doigts « maîtres » additionnels, l'effacement d'un utilisateur, le paramétrage du niveau de sécurité souhaité, l'acquisition d'informations sur l'état du système (mémoire utilisée, version, ...), etc.

La position dans le menu est donnée à l'utilisateur grâce à un ensemble de sources lumineuses commandables 12. Dans une réalisation particulière du boîtier 2 selon l'invention, le capteur 6 est rectangulaire ou carré et est voisin à chaque coin d'une diode électroluminescente 12 (LED). L'utilisateur qui connaît le code de sortie est capable de se repérer grâce à la séquence d'allumage des diodes électroluminescentes 12 (LED). La méthode la plus simple consiste à coder en « binaire » sur les 4 diodes électroluminescentes 12 (LED), ce qui permet d'avoir 16 possibilités :

| Séquence | LED 1 | LED 2 | LED 3 | LED 4 |
|---|---|---|---|---|
| 1 | 0 | 0 | 0 | 1 |
| 2 | 0 | 0 | 1 | 0 |
| 3 | 0 | 0 | 1 | 1 |
| ··· | | | | |

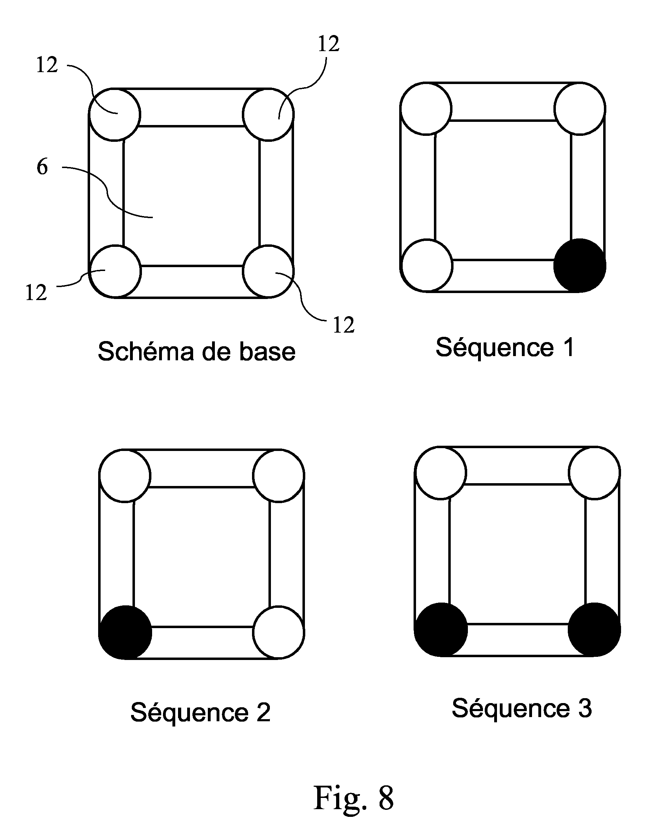

La Fig. 8 montre schématiquement un capteur 6 présentant quatre sources lumineuses commandables 12 d'une réalisation particulière du boîtier 2 selon l'invention. En haut à gauche est présenté le schéma de base du capteur 6 entouré de quatre diodes 12, les trois autres capteurs représentant avec une séquence donnée (un cercle noir représentant une diode allumée) à titre d'exemple. Ce type de boîtier 2 comprenant capteur 6 et diodes 12 est à la fois robuste, compact et discret. Des diodes de couleurs différentes peuvent aussi être utilisées pour enrichir l'interface.

Dans un de ses aspects, l'invention porte également sur un système de contrôle d'accès et de paramétrisation d'un véhicule comprenant un capteur d'empreintes digitales 6, et permettant la lutte efficace contre la piraterie routière (car-jacking), que ce soit la prévention du vol (anti-vol) ou le traitement du vol (après-vol). En particulier le système est un système de reconnaissance et pistage (tracking) d'utilisateurs via des systèmes biométriques et la transmission d'information sur réseaux (satellite, de téléphone mobile ou similaire) pour la gestion d'autorisations d'utilisation, de suivis de véhicules et moyens (engins de chantiers, remorques, ...) et de traçage d'utilisateurs.

Actuellement, les dispositifs de pistage (tracking) de véhicules permettent de connaître exactement la position d'un véhicule. Il existe également des systèmes permettant d'agir éventuellement sur les commandes de la voiture (alimentation de carburant, alimentation électrique, ....). Ces techniques étant principalement utilisées par les entreprises ayant des flottes importantes de véhicules. D'autres systèmes, pouvant être combinés à celui mentionné ci-dessus, permettent de « reconnaître » un utilisateur grâce à l'usage de codes, mot de passe, badges, etc. Grâce à des contrôleurs et une gestion centrale, on cherche à savoir « qui » est passé « où », sans vraiment y arriver et sans vraiment contrôler tout ce qui se passe.

Les systèmes d'identification utilisés (badges, mots de passe, codes, ...) ne permettent pas de s'assurer de façon fiable de l'identité de la personne qui se présente. En effet ces systèmes contrôlent ce que la personne qui se présente « possède » (badge), ou « sait » (code, mot de passe), mais pas qui elle est physiquement. Ainsi, une autre personne ayant eu accès à un identifiant, peut « tromper » ces contrôleurs, et se faire passer pour un « ayant droit ».

L'invention consiste à authentifier et à s'assurer de l'identité « réelle » de la personne, en utilisant un ou des systèmes « biométriques » basés sur la reconnaissance de caractères physiques intrinsèques à chaque personne (empreintes digitales de surface et/ou révélée par flux sanguin (ou effet capacitif) ou technologie équivalente, forme de la main, fréquences et modulation de la voix, ...), afin de contrôler la bonne utilisation de moyens (véhicules, engins de chantier, ...), en terme d'espace et de temps (utilisation dans un secteur et laps de temps défini).

Le système nécessite l'identification de l'utilisateur afin de pouvoir employer un véhicule ou moyen donné, et permet de connaître à distance l'identité de l'utilisateur, sa position et l'heure de l'action.

A cette fin, le système selon l'invention couple des capteurs biométriques avec des systèmes de pistage (tracking) par satellite (ou réseau) et de gestion de flotte ou équivalent par réseau et/ou satellite. L'identification obligatoire avant chaque mise en marche du véhicule (ou autre moyen), permet de s'assurer que l'utilisateur est bien autorisé à l'employer, et d'envoyer via réseau (Internet, GSM, ...) un signal à la centrale de surveillance indiquant les identifiants du véhicule et de l'utilisateur, ainsi que sa position géographique, l'heure de l'évènement, et éventuellement les actions mises en marche. Afin de s'assurer constamment de la bonne utilisation des moyens, la centrale peut également demander une identification à une fréquence prédéfinie, afin d'éviter la mise en marche par un « autorisé », et la manipulation par un tiers « non autorisé ».

A distance, la centrale peut aussi envoyer des données via réseau : nouveaux utilisateurs, modifications des horaires ou lieux autorisés, etc. L'objectif de l'invention est de s'assurer de la bonne utilisation des moyens (d'une entreprise, collectivité, ...) suivant une charte pré-établie et connue à la fois de la centrale et des utilisateurs autorisés. Les fichiers biométriques gérés ne permettent pas de reproduire physiquement les caractéristiques captées, assurant ainsi un respect des libertés individuelles. Seulement certains points sont connus, et non l'empreinte totale.

L'invention peut être élargie à tout système de gestion à distance d'utilisateurs prédéfinis et identifiés grâce à des procédés biométriques : empreintes digitales, morphologie des mains, reconnaissance de la voix, du visage, de l'iris, etc. Il peut être appliqué à tout domaine nécessitant la connaissance instantanée d'un utilisateur de véhicule ou moyen : gestion d'une flotte de véhicules d'entreprise, gestion d'un ensemble de véhicules industriels, ou application spécifique de type maritime, aéronautique, etc.

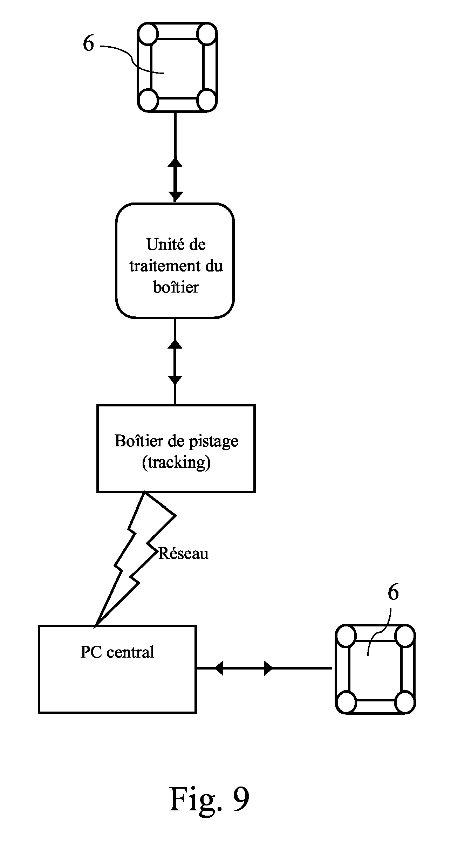

La Fig. 9 illustre schématiquement les composantes d'un système de reconnaissance et de pistage (tracking) selon la réalisation particulière décrite ci-dessus.

Les communications entre l'unité de traitement du boîtier 2, le boîtier de pistage (tracking) et la centrale de surveillance peuvent se faire par plusieurs réseaux ou protocoles de communication : ethernet, internet, satellite, GSM, GPS, USB, RS232 ou autres. Les principales informations qui sont envoyées à la centrale sont : le fichier de signature numérique de l'empreinte du doigt présenté, la position géographique, l'heure, la date, etc. Les données renvoyées par la centrale permettent au moyen (véhicule, engin de chantier, ...) de commencer à fonctionner dans les conditions définies.

L'historique des données et informations échangées est enregistré, pour un temps défini spécifiquement pour chaque application. A un intervalle « t », également paramétrable, la centrale interroge le boîtier et réactualise les données (avec éventuellement la demande d'une nouvelle identification) en renvoyant les commandes correspondant à la personne identifiée, la position géographique, l'heure, la date, etc de manière à faire fonctionner le véhicule ou moyen en conditions normales, restreindre le fonctionnement suivant la personne identifiée (fonctions spéciales, limitation de vitesse, ...), etc.

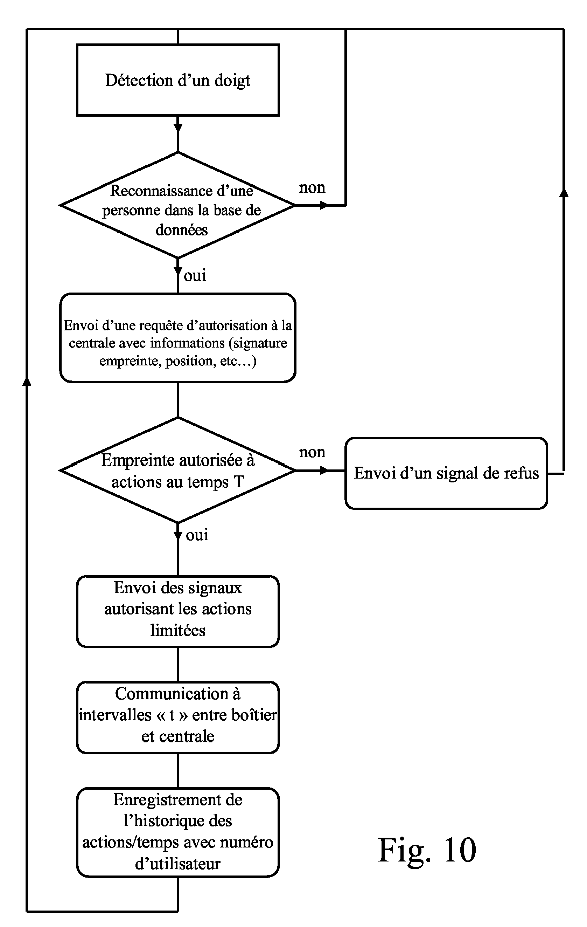

La Fig. 10 illustre schématiquement une méthode de reconnaissance et de pistage (tracking) selon l'aspect de l'invention discuté ci-dessus. Une fois un doigt 14 détecté, si celui-ci est reconnu, une requête d'autorisation est envoyée à la centrale. La requête comprend la signature d'empreinte digitale (ou plus généralement la signature biométrique), la position géographique, etc. La centrale vérifie quelles actions peuvent être entreprises par l'utilisateur correspondant à l'empreinte reçue, au temps T donné. Si les actions requises ne sont pas acceptées, un signal de refus est envoyé, sinon un signal ou des signaux autorisant des actions limitées ou non est envoyé. En outre, une communication à intervalles réguliers est établie entre le boîtier du véhicule (ou autre moyen) et la centrale de manière à permettre l'enregistrement de l'historique des actions de l'utilisateur et du véhicule au cours du temps.

Dans une variante de l'invention, le capteur d'empreintes digitales 6 est remplacé par un capteur des caractéristiques de la main, un capteur des caractéristiques de l'iris, ou encore un capteur des caractéristiques d'un visage. Dans le cas de la détection des caractéristiques de la main, la description ci-dessus s'applique mutatis mutandis. Dans le cas de la détection des caractéristiques de l'iris, l'oeil gauche et l'oeil droit peuvent servir tour à tour pour engendrer des instructions de commande différentes déterminées et naviguer dans un menu par exemple. La durée d'exposition de l'iris au détecteur peut également servir pour engendrer des instructions de commande différentes déterminées.

Par commande ou instruction de commande, il faut comprendre tout signal représentant une instruction de commande permettant la commande d'un dispositif automatique. Par boîtier de commande, il faut comprendre toute interface de commande, d'enregistrement, d'authentification, de gestion, de programmation ou de contrôle via un système de reconnaissance biométrique, même faisant partie d'une surface de commande plus étendue.

L'homme du métier comprendra que tout type de capteur 6 d'empreintes digitales peut être utilisé dans le boîtier 2 selon l'invention, dans la mesure où le temps de détection de la présence d'un doigt (durée Ta) est plus court que le temps de détection d'une empreinte (durée Tb). L'utilisation de capteur d'empreintes sous-cutanées, « sans trace », permet d'accroître sensiblement le niveau de sécurité par rapport aux autres technologies utilisées par les capteurs d'empreintes de surface, puisqu'il est impossible de « tromper » le capteur 6 avec de faux doigts 14.

L'invention concerne également une interface utilisateur telle que revendiquée (revendication 9) et un programme d'ordinateur ou support ou signal contenant un tel programme, tels que revendiqués (revendication 10).

Dans une variante de l'invention, le capteur d'empreintes digitales 6 n'est pas capable de transmettre hors du boîtier 2 une instruction de commande déterminée 8 dépendante de l'orientation détectée d'un doigt 14 sur le capteur 6, mais présente les autres caractéristiques de l'invention. Dans cette variante, le capteur 6 est totalement insensible à l'orientation de l'empreinte digitale.

## Revendications

1. Boîtier de commande (2) comprenant
un capteur d'empreintes digitales (6);
le capteur (6) étant capable de transmettre hors du boîtier (2) une instruction de commande déterminée (8) dépendante de l'orientation détectée d'un doigt (14) sur le capteur (6);
**caractérisé en ce que**
le capteur (6) nécessite une première durée (Ta) pour détecter la présence d'un doigt (14) et une deuxième durée (Tb) pour acquérir l'empreinte digitale, la première durée (Ta) étant inférieure à la deuxième durée (Tb); et
le boîtier (2) étant capable de transmettre hors de celui-ci une instruction de commande déterminée (8) dépendante du fait qu'un doigt (14) reste posé sur le capteur (6)
de manière substantiellement immobile, durant une durée de pose (Tp) plus longue qu'une troisième durée (Tc), supérieure aux première et deuxième durées (Ta, Tb); ou
de manière mobile ou immobile, durant une durée de pose (Tp) plus courte que la troisième durée (Tc), que la durée de pose (Tp) soit inférieure ou supérieure à la deuxième durée (Tb).

2. Boîtier (2) selon la revendication 1, comprenant en outre une unité centrale (10) gérant l'état du boîtier (2), au sens d'un état d'une machine d'états finis; et au moins deux sources lumineuses commandables (12) disposées près du capteur (2) pour la communication de l'état du boîtier (2) à un utilisateur.

3. Boîtier (2) selon la revendication 2,
dans lequel le capteur (6) est substantiellement rectangulaire; et
comprenant quatre sources lumineuses commandables (12) disposées autour du capteur (6) près de ses quatre coins.

4. Boîtier (2) selon l'une quelconque des revendications précédentes, comprenant une surface de commande (4) sur laquelle est disposé le capteur (6), et sur laquelle le capteur (6) est le seul composant actif d'entrée présent.

5. Boîtier (2) selon la revendication 4, dans lequel les au moins deux sources lumineuses commandables (12) sont les seuls composants actifs de sortie disposés sur la surface de commande (4).

6. Boîtier (2) selon l'une quelconque des revendications 2 à 5, dans lequel les sources lumineuses commandables (12) sont des diodes électroluminescentes.

7. Boîtier (2) selon l'une quelconque des revendications précédentes, dans lequel la troisième durée (Tc) est comprise entre 100 millisecondes et 1000 millisecondes, et est de préférence comprise entre 300 millisecondes et 700 millisecondes.

8. Boîtier (2) selon l'une quelconque des revendications précédentes, incluant une unité de mémoire ou des moyens pour communiquer avec une unité de mémoire capable d'enregistrer des caractéristiques d'utilisateurs correspondants soit à des doigts maîtres aptes à programmes le système, soit à des doigts utilisateurs n'étant pas aptes à programmer le système.

9. Interface utilisateur comprenant
un capteur d'empreintes digitales (6);
le capteur (6) étant capable de transmettre hors de l'interface une instruction de commande déterminée (8) dépendante de l'orientation détectée d'un doigt (14) sur le capteur (6);
**caractérisé en ce que**
le capteur (6) nécessite une première durée (Ta) pour détecter la présence d'un doigt (14) et une deuxième durée (Tb) pour acquérir l'empreinte digitale, la première durée (Ta) étant inférieure à la deuxième durée (Tb); et
l'interface étant capable de transmettre hors de celui-ci une instruction de commande déterminée (8) dépendante du fait qu'un doigt (14) reste posé sur le capteur (6)
durant une durée de pose (Tp) plus longue qu'une troisième durée (Tc), supérieure aux première et deuxième durées (Ta, Tb); ou
durant une durée de pose (Tp) plus courte que la troisième durée (Tc), que la durée de pose (Tp) soit inférieure ou supérieure à la deuxième durée (Tb).

10. Programme d'ordinateur ou support ou signal contenant un tel programme, pour la gestion d'un boîtier de commande 2 selon l'une quelconque des revendications 1 à 8 ou d'un comprenant une interface utilisateur selon la revendication 9.
